# FASCICULE DE BREVET EUROPEEN

(11) **EP 3 558 715 B1**
(45) Date de publication et mention de la délivrance du brevet: **10.07.2024**
(21) Numéro de dépôt: 17838050.7
(22) Date de dépôt: 20.12.2017
(51) Int. Cl.: B60C 1/00, C08C 19/22, C08C 19/25, C08L 9/06

(54) **PNEUMATIQUE POUR VÉHICULE PORTANT DES LOURDES CHARGES COMPRENANT UNE NOUVELLE BANDE DE ROULEMENT**
REIFEN MIT NEUER LAUFFLÄCHE FÜR EIN FAHRZEUG ZUM TRAGEN VON SCHWEREN LASTEN
TYRE FOR A VEHICLE CARRYING HEAVY LOADS, COMPRISING A NEW TREAD

(30) Priorité: 20.12.2016 FR 1662909
(43) Date de publication de la demande: 30.10.2019
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR)
(74) Mandataire: M.F.P. Michelin
(86) Numéro de dépôt international: PCT/FR2017/053744
(87) Numéro de publication internationale: WO 2018/115748

(56) Documents cités:
- WO-A1-2016/031476
- US-A1- 2016 160 015

## Description

Le domaine de la présente invention est celui des pneumatiques pour les véhicules portant de lourdes charges, en particulier les véhicules poids-lourds, les bus, les véhicules de génie civil, etc.

Les pneumatiques destinés aux véhicules portant de lourdes charges comportent des caractéristiques propres de dimensions, de robustesse, d'architecture qui les distinguent des autres pneumatiques, notamment des pneumatiques pour équiper des véhicules de tourisme. Leurs bandes de roulement doivent obéir à un grand nombre de performances techniques souvent antinomiques, en particulier une adhérence élevée sur sol mouillé, une faible résistance au roulement et une bonne résistance à l'usure.

En effet, certains véhicules portant des lourdes charges sont destinés à rouler sur des trajets de plus en plus longs, du fait de l'amélioration du réseau routier et de la croissance du réseau autoroutier dans le monde. Pour des questions de sécurité, l'adhérence sur sol mouillé doit être élevée. Par ailleurs, l'usure de la bande de roulement de ces pneumatiques doit être la plus faible possible ainsi que les pertes d'énergie liées au roulement.

Or, il est bien connu de l'homme de l'art que l'amélioration d'une performance pour des pneumatiques est souvent obtenue au détriment des autres performances.

Par exemple, une façon de conférer au pneumatique une adhérence élevée sur sol mouillée est d'utiliser, pour la bande de roulement, une composition de caoutchouc qui présente un bon potentiel hystérétique. Or, en même temps, cette bande de roulement doit avoir une contribution à la résistance au roulement la plus faible possible pour limiter les pertes d'énergie liées au roulement ; c'est-à-dire qu'elle doit être la moins hystérique possible.

Un autre exemple de performances antinomiques est le suivant. Pour améliorer la résistance à l'usure, l'homme du métier sait qu'il est nécessaire que la bande de roulement ait une bonne rigidité. Une telle rigidité peut être obtenue notamment en augmentant le taux de charge renforçante dans les compositions de caoutchouc constitutives de ces bandes de roulement. Mais l'augmentation de ce taux de charges renforçantes engendre une augmentation de l'hystérèse du pneumatique et donc un risque de pénaliser les propriétés de résistances au roulement.

WO2016/031476 divulgue une composition pour la bande de roulement d'un pneumatique démontrant de bonnes propriétés d'adhésion sur sol mouillé et de résistance à l'abrasion.

Il existe donc un besoin permanent de fournir un pneumatique pour les véhicules portant de lourdes charges ayant une bande de roulement dont l'adhérence sur sol mouillé est élevée sans que soient pénaliser la résistance au roulement et la résistance à l'usure.

Au vu de ce qui précède, il est un objectif de fournir un pneumatique destiné à équiper un véhicule portant de lourdes charges, ce pneumatique comportant une bande de roulement qui satisfasse un compromis de performances adhérence sur sol mouillé/résistance au roulement/résistance à l'usure.

Les Demanderesses ont découvert lors de leur recherches que la combinaison spécifique d'un copolymère à base de styrène et de butadiène modifié, d'une charge renforçante comprenant à titre majoritaire de la silice et d'un système plastifiant à un taux spécifique permet d'obtenir une composition de caoutchouc utilisable dans une bande de roulement pour pneumatique pour les véhicules portant de lourdes charges répondant à cette problématique.

Ainsi l'invention concerne un pneumatique destiné à équiper un véhicule portant de lourdes charges, ce pneumatique comportant une bande de roulement ayant au moins une composition de caoutchouc à base d'au moins:
- une matrice élastomère comprenant au moins un copolymère modifié à un taux supérieur ou égal à 51 pce, ledit copolymère modifié ayant une température de transition vitreuse Tg strictement supérieure à -65°C et inférieure ou égale à - 30°C, ledit copolymère modifié étant obtenu par modification du copolymère à base de styrène et de butadiène avec un agent de fonctionnalisation sur le copolymère vivant issu d'étape de polymérisation anionique et est composé de copolymères fonctionnalisés en extrémité de chaîne, de copolymères étoilés et de copolymères fonctionnalisés en milieu de chaîne par une groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium, l'agent de fonctionnalisation répondant à la formule

   (OR')₃ SiX

   dans laquelle,
   - dans les radicaux alcoxyle de formule -OR', R' représente un radical alkyle, substitué ou non substitué, en C₁-C₁₀, voire en C₁-C₈, de préférence un groupe alkyle en C₁-C₄, plus préférentiellement méthyle et éthyle;
   - X représente un groupement incluant une fonction amine,
- une charge renforçante comprenant à titre majoritaire de la silice,
- un système de réticulation chimique,
- un agent de couplage entre ladite matrice élastomérique et ladite charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans
la composition va de 2 à 17 pce, de préférence de 2 à 12 pce.

Préférentiellement, la fonction amine dudit copolymère modifié est une amine primaire, secondaire ou tertiaire.

Préférentiellement, la fonction amine dudit copolymère modifié est une amine tertiaire et est choisie parmi la diéthylamine et la diméthylamine.

Préférentiellement, la fonction amine dudit copolymère modifié est portée par le groupe alcoxysilane par l'intermédiaire d'un groupement espaceur.

Préférentiellement, le groupe espaceur portant la fonction amine du copolymère modifié est un radical hydrocarboné aliphatique en C₁-C₁₈, de préférence un radical hydrocarboné linéaire en C₂ ou C₃.

Préférentiellement, le groupe alcoxysilane du copolymère modifié est le méthoxysilane ou l'éthoxysilane, éventuellement partiellement ou totalement hydrolysé en silanol.

Préférentiellement, le copolymère à base de styrène et à base de butadiène fonctionnalisé en milieu de chaîne par une groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium est l'espèce majoritaire du copolymère modifié.

Préférentiellement, le copolymère modifié a une température de transition vitreuse allant de - 60 à - 40°C.

Préférentiellement, la matrice élastomère comprend en outre au moins un deuxième élastomère diénique différent du copolymère modifié.

Préférentiellement, le deuxième élastomère diénique est choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence le deuxième élastomère diénique est un polybutadiène.

Préférentiellement, le taux du deuxième élastomère diénique va de 5 à 49 pce, de préférence de 15 à 35 pce.

Préférentiellement, la composition comprend en outre du noir de carbone.

Préférentiellement, le taux de la charge renforçante va de 55 à 200 pce, de préférence de 55 à 150 pce, de manière plus préférée de 55 à 80 pce.

Préférentiellement, la résine plastifiante a une température de transition vitreuse Tg supérieure ou égale à 30°C, de préférence allant de à 30 à 100°C.

Préférentiellement, la résine plastifiante est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les mélanges de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Préférentiellement, le système plastifiant comprend de 0 à 2 pce d'au moins un agent plastifiant liquide à température ambiante.

Préférentiellement, la composition est exempte d'un agent plastifiant liquide à température ambiante.

Préférentiellement, le pneumatique tel que défini-ci-dessus est destiné à équiper un véhicule poids-lourd ou un bus.

### I - DESCRIPTION DETAILLEE DE L'INVENTION

L'invention concerne un pneumatique destiné à équiper un véhicule portant de lourdes charges, ce pneumatique comportant une bande de roulement ayant au moins une composition de caoutchouc à base d'au moins:
- une matrice élastomère comprenant au moins un copolymère modifié à un taux supérieur ou égal à 51 pce, ledit copolymère modifié ayant une température de transition vitreuse Tg strictement supérieure à -65°C et inférieure ou égale à - 30°C, ledit copolymère modifié étant obtenu par modification du copolymère à base de styrène et de butadiène avec un agent de fonctionnalisation sur le copolymère vivant issu d'étape de polymérisation anionique et est composé de copolymères fonctionnalisés en extrémité de chaîne, de copolymères étoilés et de copolymères fonctionnalisés en milieu de chaîne par une groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium, l'agent de fonctionnalisation répondant à la formule

   (OR')₃ SiX

   dans laquelle,
   - dans les radicaux alcoxyle de formule -OR', R' représente un radical alkyle, substitué ou non substitué, en C₁-C₁₀, voire en C₁-C₈, de préférence un groupe alkyle en C₁-C₄, plus préférentiellement méthyle et éthyle;
   - X représente un groupement incluant une fonction amine,
- une charge renforçante comprenant à titre majoritaire de la silice,
- un système de réticulation chimique,
- un agent de couplage entre ladite matrice élastomérique et ladite charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition va de 2 à 17 pce, de préférence de 2 à 12 pce.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Par « pneumatique destiné à équiper un véhicule portant de lourdes charges » on entend de manière générique tout pneumatique destiné à équiper des véhicules poids-lourds, des bus, des véhicules de génie civil, des véhicules agricoles ou des avions. L'invention est particulièrement bien adaptée aux pneumatiques destiné à équiper des véhicules poids-lourds.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Par « matrice élastomère » ou « matrice élastomérique », on entend l'ensemble du ou des élastomère(s) présent(s) modifié(s) ou non dans la composition de caoutchouc.

Par élastomère (ou indistinctement caoutchouc) qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non). Ces élastomères sont aussi appelés élastomères diéniques.

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (pourcentage molaire) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15% pourcentage molaire). Dans la catégorie des élastomères diéniques "essentiellement insaturés", on entend en particulier par élastomère diénique « fortement insaturé » un élastomère diénique ayant un taux de motifs d'origine diénique (diènes conjugués) qui est supérieur à 50% (pourcentage molaire).

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un monomère éthylène ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier comprendra que la présente invention est de préférence mise en oeuvre avec des élastomères diéniques essentiellement insaturés, en particulier du type (a) ou (b) ci-dessus.

Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à une charge inorganique renforçante telle que silice, on peut citer par exemple des groupes fonctionnels silanol ou polysiloxane ayant une extrémité silanol (tels que décrits par exemple dans FR2740778 ou US6013718, et WO2008/141702), des groupes alkoxysilane (tels que décrits par exemple dans FR2765882 ou US5977238), des groupes carboxyliques (tels que décrits par exemple dans WO01/92402 ou US6815473, WO2004/096865 ou US2006/0089445) ou encore des groupes polyéthers (tels que décrits par exemple dans EP1 127909 ou US6503973, WO2009/000750 et WO2009/000752).

On peut aussi citer comme élastomères diéniques fonctionnels ceux préparés par l'utilisation d'un amorceur fonctionnel, notamment ceux portant une fonction amine ou étain (voir par exemple WO2010/072761).

Comme autres exemples d'élastomères diéniques fonctionnalisés, on peut citer également des élastomères (tels que BR, NR ou IR) du type époxydés.

Par « majoritairement » ou « à titre majoritaire », on entend au sens de la présente invention, que le composé est majoritaire parmi les composés du même type dans la composition, c'est-à-dire que c'est celui qui représente la plus grande quantité en masse parmi les composés du même type. En d'autres termes, la masse de ce composé représente au moins 51 % de la masse totale des composés du même type dans la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse totale des élastomères, autrement dit la masse de cet élastomère représente au moins 51 % de la masse totale des élastomères. De la même manière, une charge dite majoritaire est celle représentant la plus grande masse parmi les charges de la composition. En d'autres termes, la masse de cette charge représente au moins 51% de la masse totale des charges dans la composition.

Par « minoritaire », on entend un composé qui ne représente pas la fraction massique la plus grande parmi les composés du même type.

Toutes les valeurs de température de transition vitreuse « Tg » sont mesurées de manière connue par DSC (Differential Scanning Calorimetry) selon la norme ASTM D3418 (1999).

Par « exempte de composé X », on entend que le composé X n'est pas détectable par des mesures connues par l'homme du métier ou que ce composé X est présent à des quantités faibles qui représentent des impuretés (c'est-à-dire de l'ordre du ppm (parties en poids par million)).

Dans le cadre de l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les composés (tels que les monomères, les polymères), les réactifs et autres composants mentionnés dans la description, tel que les plastifiants, les charges, etc.

### Copolymère modifié

La matrice élastomérique de la composition de caoutchouc du pneumatique conforme à l'invention comprend au moins un copolymère modifié à un taux supérieur ou égal à 51 pce, ledit copolymère modifié a une température de transition vitreuse Tg strictement supérieure à -65°C et inférieure ou égale à -30°C et est composé d'un copolymère à base de styrène et à base de butadiène fonctionnalisé en milieu de chaîne par un groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium.

Par « copolymère à base de styrène et de butadiène », on entend ici un copolymère résultant de la polymérisation d'au moins un monomère styrène et d'au moins un monomère butadiène (et bien entendu également tout mélange de tels copolymères). A titre de monomères styrènes conviennent notamment le styrène, les méthylstyrènes, le para-tertiobutylstyrène, les méthoxystyrènes, les chlorostyrènes. A titre de monomères butadiènes conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène et un aryl-1,3-butadiène.

Parmi les copolymères à base de styrène et de butadiène, on peut citer notamment ceux ayant une teneur en styrène comprise entre 5% et 60% en poids, et plus particulièrement entre 20% et 50% en poids par rapport au poids du copolymère, une teneur molaire (% molaire) en liaisons -1,2 de la partie butadiénique comprise entre 4% et 75%, une teneur molaire (% molaire) en liaisons trans-1,4 de la partie butadiénique comprise entre 10% et 80%. La teneur en styrène en poids, la teneur molaire des liaisons -1,2 de la partie butadiénique et la teneur molaire en liaison trans-1,4 sont mesurées par des techniques bien connues de l'homme du métier.

Préférentiellement, le copolymère à base de styrène et de butadiène est constitué de monomères de styrène et de monomères de butadiène, c'est-à-dire que la somme des pourcentages molaires de monomères de styrène et de monomères butadiène est égale à 100%.

Dans la suite de la description, par simplification, on utilise l'expression « copolymère à base de styrène et de butadiène » pour désigner un copolymère comprenant des monomères de styrène et des monomères de butadiène et un copolymère constitué de monomères de styrène et de monomères de butadiène.

Par « copolymère à base de styrène et de butadiène fonctionnalisé en milieu de chaîne » on entend au sens de la présente invention, un copolymère à base de styrène et de butadiène ayant un groupe fonctionnel qui se situe dans la chaîne principale du copolymère.

On dira de manière équivalente que le copolymère est couplé ou encore fonctionnalisé en milieu de chaîne (bien que le groupement fonctionnel ne se situe pas précisément au milieu de la chaîne élastomère) par opposition à un copolymère fonctionnalisé en bout ou en extrémité de chaîne.

En effet, de manière générale, lorsqu'un groupe fonctionnel se situe en bout de chaîne d'un élastomère, on dit alors que l'élastomère est fonctionnalisé en bout ou en extrémité de chaîne.

De même, lorsqu'un groupe fonctionnel est en position centrale auquel au moins trois branches élastomères sont liées formant une structure en étoile de l'élastomère, on dira que l'élastomère est étoilé

Le copolymère à base de styrène et de butadiène fonctionnalisé en milieu de chaîne utilisé dans le cadre de l'invention est obtenu par modification du copolymère à base de styrène et de butadiène avec un agent de fonctionnalisation sur le copolymère vivant issu d'étape de polymérisation anionique.

Le copolymère modifié résultant est composé d'un copolymère à base de styrène et de butadiène fonctionnalisé en milieu de chaîne par un groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium. Ce copolymère modifié a une température de transition vitreuse Tg strictement supérieure à -65°C et inférieure ou égale à -30°C. De préférence, la température de transition vitreuse Tg dudit copolymère modifié peut aller de -60°C à -40°C. L'homme du métier sait comment modifier la microstructure d'un copolymère à base de styrène et de butadiène-pour ajuster sa Tg, notamment en jouant sur les teneurs en styrène, en liaisons -1,2 de la partie butadiénique ou encore en liaisons trans-1,4 de la partie butadiénique. L'homme du métier sait également que le copolymère modifié résultant est composé, c'est-à-dire est formé d'un ou plusieurs copolymères à base de styrène et de butadiène fonctionnalisé en milieu de chaîne par un groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium.

Dans la présente description, la notion de groupe alcoxysilane fonctionnalisant en milieu de chaîne du copolymère modifié s'entend comme un groupe dont l'atome de silicium est situé dans le squelette dudit copolymère et directement relié à celui-ci. Le groupe alcoxysilane n'est pas un groupe pendant.

Préférentiellement, dans le groupe alcoxysilane, le radical alcoxyle, éventuellement partiellement ou totalement hydrolysé en hydroxyle, comprend un radical alkyle en C₁-C₁₀, voire en C₁-C₈, de préférence en C₁-C₄, plus préférentiellement le radical alcoxyle est un méthoxy ou un éthoxy.

L'élastomère modifié utilisé dans le cadre de l'invention comprend également une fonction amine portée par le groupe alcoxysilane. La fonction amine est portée par le silicium du groupe alcoxysilane, directement ou par l'intermédiaire d'un groupe espaceur.

Selon une mise en oeuvre, le groupe alcoxysilane peut être représenté par la formule

(*-)₂Si(OR)X

dans laquelle,
- *- représente la liaison à une chaîne élastomère ;
- dans les radicaux alcoxyle de formule -OR, éventuellement partiellement ou totalement hydrolysés en hydroxyle, R représente un radical alkyle, substitué ou non substitué, étant en C₁-C₁₀, voire en C₁-C₈, de préférence un radical alkyle en C₁-C₄, plus préférentiellement méthyle et éthyle ;
- X représente la fonction amine.

On peut citer, à titre de fonction amines, les amines primaires, protégées ou non par un groupement protecteur, les amines secondaires, protégées ou non par un groupement protecteur, ou les amines tertiaires.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-. Conviennent également lorsque l'amine est cyclique les groupements morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-dimethylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine, de préférence les groupements pyrrolidine et l'hexaméthylèneamine.

De préférence, la fonction amine est une fonction amine tertiaire, de préférence diéthylamine ou diméthylamine.

Selon une variante, la fonction amine est directement liée à l'atome de silicium lui-même directement intégré à la chaîne élastomère.

Selon une autre variante, la fonction amine est portée par le groupe alcoxysilane par l'intermédiaire d'un groupement espaceur qui peut être un atome, notamment un hétéroatome, ou un groupe d'atomes qui lie la fonction amine à l'atome de silicium. Le groupement espaceur peut être un radical hydrocarboné divalent, linéaire ou ramifié, aliphatique en C₁-C₁₈, saturé ou non, cyclique ou non, ou un radical hydrocarboné divalent aromatique en C₆-C₁₈ et peut contenir un ou plusieurs radicaux aromatiques et/ou un ou plusieurs hétéroatomes. Le radical hydrocarboné peut éventuellement être substitué.

Selon une variante préférée, le groupement espaceur est un radical hydrocarboné divalent, linéaire ou ramifié, aliphatique en C₁-C₁₈, plus préférentiellement un radical hydrocarboné divalent aliphatique, plus préférentiellement encore un radical hydrocarboné divalent linéaire en C₂ ou C₃.

Les différents aspects, préférentiels ou non, qui précèdent et qui concernent notamment la nature de la fonction comprenant un atome d'azote, la nature du groupement espaceur, la nature du groupe alcoxysilane et la nature du copolymère à base de styrène et de butadiène sont combinables entre eux, sous réserve de leur comptabilité.

Le copolymère modifié selon l'invention peut être obtenu par un procédé général tel que décrit ci-après. L'homme du métier sait adapter ce procédé général au copolymère particulier qui est le copolymère à base de styrène et à base de butadiène ayant une température de transition vitreuse Tg strictement supérieure à -65°C et inférieure ou égale à -30°C.

La première étape d'un procédé de préparation de l'élastomère diénique modifié est la polymérisation anionique d'au moins un monomère styrène et un monomère butadiène, en présence d'un initiateur de polymérisation. Les monomères sont tels que décrits plus haut.

En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium ou liaison amine-lithium. Des composés représentatifs d'initiateurs de polymérisation comportant une liaison carbone-lithium sont les organolithiens aliphatiques tels que l'éthyllithium, le n-butyllithium (n-BuLi), l'isobutyllithium, etc ...

Des composés représentatifs d'initiateurs de polymérisation comportant une liaison amine-lithium sont, de manière préférée, les amidures de lithium, produits de la réaction d'un composé organolithien, de préférence alkyllithien, et d'une amine secondaire acyclique ou cyclique, de préférence cyclique.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La microstructure du copolymère peut être déterminée par la présence ou non d'un agent modifiant et/ou randomisant et les quantités d'agent modifiant et/ou randomisant employées. Préférentiellement, lorsque l'élastomère diénique est à base butadiène et de styrène un agent polaire est utilisé lors de l'étape de polymérisation dans des quantités telles qu'il favorise la répartition statistique du styrène le long des chaînes polymères.

De manière avantageuse, le copolymère vivant issu de la polymérisation est ensuite fonctionnalisé au moyen d'un agent de fonctionnalisation susceptible d'introduire un groupe alcoxysilane aminé au sein de la structure copolymère pour préparer le copolymère modifié selon l'invention.

La réaction de modification du copolymère vivant, obtenu à l'issue de la première étape, peut se dérouler à une température comprise entre - 20°C et 100 C, par addition sur les chaînes polymères vivantes ou inversement d'un agent de fonctionnalisation non polymérisable susceptible de former un groupe alcoxysilane, l'atome de silicium s'intégrant au sein de la chaîne élastomère, porteur d'une fonction amine. Il s'agit particulièrement d'un agent de fonctionnalisation porteur de fonctions réactives vis-à-vis de l'élastomère vivant, chacune de ces fonctions étant directement liée à l'atome de silicium.

Ainsi, l'agent de fonctionnalisation utilisé dans le cadre de l'invention répond à la formule :

(OR')₃ SiX

dans laquelle,
- dans les radicaux alcoxyle de formule -OR', R' représente un radical alkyle, substitué ou non substitué, en C₁-C₁₀, voire en C₁-C₈, de préférence un groupe alkyle en C₁-C₄, plus préférentiellement méthyle et éthyle ;
- X représente un groupement incluant une fonction amine.

Préférentiellement, la fonction amine est une amine primaire, protégée ou non, une amine secondaire, protégée ou non, ou une amine tertiaire. L'atome d'azote peut alors être substitué par deux groupements, identiques ou différents, pouvant être un radical trialkyl-silyle, le groupement alkyle ayant 1 à 4 atomes de carbone, ou un radical alkyle en C₁-C₁₀, de préférence alkyle en C₁-C₄, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation les (N,N-dialkylaminoalkyl)trialcoxysilanes, les (N-alkylaminoalkyl)trialcoxysilanes dont la fonction amine secondaire est protégée par un groupement trialkyl silyl et les (aminoalkyl)trialcoxysilanes dont la fonction amine primaire est protégée par deux groupements trialkyl sily, le groupement hydrocarboné divalent permettant de lier la fonction amine au groupe trialcoxysilane est le groupe espaceur tel que décrit plus haut, préférentiellement aliphatique en C₁-C1₈, plus particulièrement linéaire en C₂ ou C₃.

De manière avantageuse, l'agent de fonctionnalisation est choisi parmi les (N,N-dialkylaminoalkyl)trialcoxysilanes.

Ainsi, l'agent de fonctionnalisation peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de fonctionnalisation est le 3-(N,N-diméthylaminopropyl)triméthoxysilane.

L'agent de fonctionnalisation peut également être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de fonctionnalisation est le 3-(N,N-méthyltriméthylsilylaminopropyl)triméthoxysilane.

L'agent de fonctionnalisation peut encore être choisi parmi le 3-(N,N-bistriméthylsilylaminopropyl)triméthoxysilane et le 3-(N,N-bistriméthylsilylaminopropyl)triéthoxysilane. Plus préférentiellement, l'agent de fonctionnalisation est le 3-(N,N-bistriméthylsilylaminopropyl)triméthoxysilane.

Plus particulièrement, l'agent de fonctionnalisation est le 3-(N,N-diméthylaminopropyl)triméthoxysilane.

Le rapport molaire de l'agent de fonctionnalisation au métal de l'initiateur de polymérisation est piloté par le fait que le copolymère à base de styrène et de butadiène est fonctionnalisé en milieu de chaîne. L'homme du métier sait choisir le rapport molaire approprié de l'agent de fonctionnalisation.

Selon une mise en oeuvre du procédé de synthèse, le groupe alcoxysilane comporte avantageusement un radical alcoxy, éventuellement partiellement ou totalement hydrolysé en hydroxyle.

Selon les variantes selon lesquelles l'agent de fonctionnalisation est porteur d'une fonction amine protégée, le procédé de synthèse peut se poursuivre par une étape de déprotection de cette fonction. Cette étape est mise en oeuvre après la réaction de modification et est bien connue de l'homme du métier.

Selon des variantes, le procédé de synthèse peut comprendre une étape d'hydrolyse des fonctions alcoxyles hydrolysables, par adjonction d'un composé acide, basique ou neutre tel que décrit dans le document EP2266819A1. Les fonctions hydrolysables sont alors transformées en fonction hydroxyles.

Le procédé de synthèse du copolymère modifié peut se poursuivre de manière connue en soi par les étapes de récupération du copolymère modifié.

Selon des variantes de ce procédé, ces étapes comprennent une étape de stripping en vue de récupérer le copolymère issu des étapes antérieures. Cette étape de stripping peut avoir pour effet d'hydrolyser tout ou partie des fonctions hydrolysables du copolymère modifié. Avantageusement, au moins 50 à 70% molaire de ces fonctions peuvent ainsi être hydrolysées.

Selon un mode de réalisation du procédé, le rapport molaire de l'agent de fonctionnalisation au métal de l'initiateur de polymérisation a une valeur allant de 0,40 à 0,75, voire de 0,45 à 0,65, ou encore de 0,45 à 0,55. Selon ce mode de réalisation, préférentiellement, le copolymère modifié est majoritairement fonctionnalisé en milieu de chaîne par un groupe alcoxysilane liant les deux branches de l'élastomère diénique par l'intermédiaire de l'atome de silicium qui est porteur d'une fonction amine lié directement ou par l'intermédiaire d'un groupe espaceur à l'atome de silicium.

Il convient de préciser qu'il est connu de l'homme du métier que lorsqu'un copolymère est modifié par réaction d'un agent de fonctionnalisation sur le copolymère vivant issu d'une étape de polymérisation anionique, on obtient un mélange d'espèces modifiées de ce copolymère dont la composition dépend des condition de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées et étoilées. Le copolymère modifié est donc composé de copolymères fonctionnalisées en extrémité de chaîne, de copolymères fonctionnalisés milieu de chaîne et de copolymères étoilés.

Par « majoritairement fonctionnalisé en milieu de chaîne » on entend au sens de la présente invention, que dans le mélange d'espèces du copolymère modifié obtenues lors de la modification du copolymère à base de styrène et de butadiène, l'espèce majoritaire est l'espèce couplée (ou l'espèce fonctionnalisé en milieu de chaîne), c'est-à-dire que le taux de l'espèce couplée est supérieur ou égal à 51% en poids par rapport au poids total du mélange d'espèces du copolymère modifié.

Préférentiellement, le copolymère à base de styrène et de butadiène fonctionnalisé en milieu de chaîne par un groupe alcoxysilane liant les deux branches de l'élastomère diénique par l'intermédiaire de l'atome de silicium qui est porteur d'une fonction amine lié directement ou par l'intermédiaire d'un groupe espaceur à l'atome de silicium représente au moins 70% en poids du copolymère modifié.

Selon des mises en oeuvre particulièrement préférées, le copolymère à base de styrène et de butadiène modifié fonctionnalisé en milieu de chaîne par un groupe alcoxysilane porteur d'une fonction amine et ayant une température de transition vitreuse Tg strictement supérieure à -65°C et inférieure ou égale à -30°C est un copolymère à base de styrène et de butadiène pour lequel au moins une, au moins deuxdes caractéristiques suivantes est respectée et de préférence toutes :
- la fonction amine est une amine tertiaire, plus particulièrement un groupement diéthylamino- ou diméthylamino-,
- la fonction amine est portée par le groupe alcoxysilane par l'intermédiaire d'un groupement espaceur étant un radical hydrocarboné aliphatique en C₁-C₁₈, plus préférentiellement encore le radical hydrocarboné linéaire en C₂ ou C₃,
- le groupe alcoxysilane est le méthoxysilane ou l'éthoxysilane, éventuellement partiellement ou totalement hydrolysé en silanol.

Préférentiellement, le copolymère à base de styrène et de butadiène modifié fonctionnalisé en milieu de chaîne par un groupe alcoxysilane et ayant une température de transition vitreuse Tg strictement supérieure à -65°C et inférieure ou égale à -30°C est un copolymère à base de styrène et de butadiène pour lequel :
- la fonction amine est portée par le groupe alcoxysilane par l'intermédiaire d'un radical hydrocarboné linéaire en C₃,
- la fonction amine est une amine tertiaire, plus particulièrement un groupement diéthylamino- ou diméthylamino-;
- le groupe alcoxysilane est le méthoxysilane ou l'éthoxysilane, éventuellement partiellement ou totalement hydrolysé en silanol.

Plus préférentiellement encore, le copolymère à base de styrène et de butadiène modifié majoritairement fonctionnalisé en milieu de chaîne par un groupe alcoxysilane et ayant une température de transition vitreuse Tg strictement supérieure à -65°C et inférieure ou égale à -30°C est un copolymère à base de styrène et de butadiène pour lequel :
- la fonction amine est portée par le groupe alcoxysilane par l'intermédiaire d'un radical hydrocarboné linéaire en C₃,
- la fonction amine est une amine tertiaire, plus particulièrement un groupement diéthylamino- ou diméthylamino-;
- le groupe alcoxysilane est le méthoxysilane ou l'éthoxysilane, éventuellement partiellement ou totalement hydrolysé en silanol.

On notera avantageusement que la composition de caoutchouc du pneumatique conforme à l'invention peut ne pas comprendre ou peut comprendre en une quantité très faible un copolymère à base de styrène et de butadiène étendu; autrement dit le taux de copolymère à base de styrène et de butadiène étendu, si ce type de copolymère est présent, peut être inférieur ou égal à 2 pce, de manière préférée à ce taux peut correspondre à une impureté. Plus particulièrement, la composition de caoutchouc du pneumatique conforme à l'invention peut être exempte de copolymère à base de styrène et de butadiène étendu. Par copolymère étendu, on entend un copolymère étendu et stabilisé avec une huile, notamment de type paraffinique, naphténique ou aromatique.

Préférentiellement, le taux dudit élatomère modifié, dans la composition de caoutchouc du pneumatique conforme à l'invention peut aller de 51 à 100 pce, de préférence de 60 à 100 pce, de manière encore plus préférée 60 à 85 pce.

L'élastomère modifié tel que défini ci-dessus peut avantageusement être utilisé en coupage (mélange) avec un ou plusieurs autre(s) élastomère(s) diénique(s) différent(s) dudit élastomère modifié. Dans le cas d'un coupage, il est notamment entendu que la somme des différents élastomères utilisés est égale à 100 pce.

Ainsi, dans un mode de réalisation du pneumatique conforme à l'invention, audit élastomère modifié ci-dessus peut être associé éventuellement au moins un deuxième élastomère diénique, différent dudit élastomère modifié, c'est-à-dire que le deuxième élastomère diénique ne comportant pas des unités issues de styrène et de butadiène. Lorsqu'il est présent, le deuxième élastomère diénique peut être choisi dans le groupe formé par les polybutadiènes (BR), le caoutchouc naturel (NR), les isoprènes de synthèse, (IR), les copolymères butadiènes autre que les copolymères butadiène-styrène, les copolymères d'isoprènes et les mélanges de ces polymères et copolymères. De préférence, ledit deuxième élastomère diénique peut être un polybutadiène (BR). Lorsqu'il est présent, le taux du deuxième élastomère diénique peut être d'au plus égal à 49 pce, préférentiellement d'au plus égal à 35 pce. De préférence, le taux du deuxième élastomère diénique peut aller de 5 à 49 pce (pour rappel, pce signifiant parties en poids pour cent parties d'élastomère, c'est-à-dire du total des élastomères présents dans la bande de roulement), de préférence de 15 à 35 pce.

Dans un autre mode de réalisation du pneumatique conforme à l'invention, audit élastomère modifié tel que décrit ci-dessus peut être associé éventuellement au moins un deuxième élastomère diénique, différent dudit élastomère modifié (c'est-à-dire ne comportant pas des unités issues de styrène et de butadiène) et un troisième élastomère différent dudit copolymère à base de styrène et de butadiène et du deuxième élastomère diénique. De préférence, le troisième élastomère diénique peut être un élastomère isoprénique. Préférentiellement, le deuxième élastomère diénique peut être choisi dans le groupe formé par les polybutadiènes (BR) et les copolymères butadiènes autre que les copolymères butadiène-styrène ; et le troisième élastomère diénique peut être choisi dans le groupe formé par le caoutchouc naturel (NR), les isoprènes de synthèse, (IR), les copolymères d'isoprènes et les mélanges de ces polymères et copolymères. De préférence, le deuxième élastomère diénique peut être le butadiène et le troisième élastomère diénique peut être du caoutchouc naturel ou un isoprène de synthèse. Préférentiellement, le taux du deuxième élastomère peut aller de 0,5 à 35 pce, et le taux du troisième élastomère peut aller de 0,5 à 35 pce ; de manière plus préférée, le taux du deuxième élastomère peut aller de 9 à 31 pce et le taux du troisième élastomère peut aller de 4 à 24 pce.

Parmi les polybutadiènes ou copolymères de butadiène utilisés dans les coupages ci-dessus, conviennent en particulier les polybutadiènes ayant une teneur (% molaire) en unités -1,2 comprise entre 4% et 80% ou ceux ayant une teneur (% molaire) en cis-1,4 supérieure à 80% plus particulièrement supérieure à 90%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Parmi les élastomères isopréniques (i.e., homopolymères ou copolymères d'isoprène) utilisés dans les coupages ci-dessus, on citera en particulier NR, IR, les copolymères d'isoprène tels que copolymères d'isobutène-isoprène (caoutchouc butyle ou IIR), d'isoprène-styrène (SIR), d'isoprène-butadiène (BIR) ou d'isoprène-butadiène-styrène (SBIR). Parmi ces polyisoprènes de synthèse, peuvent être utilisés de préférence des polyisoprènes ayant un taux (% molaire) de liaisons cis-1,4 supérieur à 90%, plus préférentiellement encore supérieur à 98%.

Aux élastomères diéniques précédemment décrits peuvent être également associés, en quantité minoritaire, des élastomères synthétiques autres que diéniques, voire des polymères autres que des élastomères, par exemple des polymères thermoplastiques.

### Charge renforçante

La composition de caoutchouc utilisée dans les pneumatiques de l'invention comporte au moins une charge renforçante comprenant à titre majoritaire de la silice, c'est-à-dire que la masse de la silice représente au moins 51% de la masse totale des constituants de la charge renforçante. De préférence, la masse silice représente plus de 60 %, de préférence plus de 70% de la masse total de la charge renforçante.

Dans le présent exposé, la surface spécifique BET est déterminée de manière connue par adsorption de gaz à l'aide de la méthode de Brunauer-Emmett-Teller décrite dans « The Journal of the American Chemical Society » Vol. 60, page 309, février 1938, plus précisément selon la norme française NF ISO 9277 de décembre 1996 (méthode volumétrique (5 point- gaz : azote - dégazage : 1heure à 160°C - domaine de pression relative p/po : 0.05 à 0.17). La surface spécifique CTAB est la surface externe déterminée selon la norme française NF T45-007 de novembre 1987 (méthode B)

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyles (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales de type siliceuses, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO03/016837.

Bien entendu, on entend également par charge renforçante inorganique des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganiques non siliceuses, on peut citer les charges minérales du type alumineuses, en particulier de l'alumine (Al₂O₃) ou des (oxydes)hydroxydes d'aluminium, ou encore des oxydes de titane renforçants, par exemple décrits dans US6610261 et US6747087. Les charges inorganiques non siliceuses, lorsque présentes, sont minoritaires dans la charge renforçante.

L'état physique sous lequel se présente la charge renforçante inorganique est indifférent, que ce soit sous forme de poudre, de microperles, de granulés, ou encore de billes.

Selon un mode de réalisation, le taux de la charge renforçante, dans la composition de caoutchouc du pneumatique conforme à l'invention peut aller de 55 pce à 200 pce, de préférence de 55 à 150 pce, de manière plus préférée va de 55 à 80 pce. Ces plages préférentielles s'appliquent à l'un quelconque des modes de réalisation de l'invention.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO96/37547, WO99/28380.

### Noir de carbone :

Selon un mode de réalisation du pneumatique conforme à l'invention, la composition de caoutchouc peut comprendre en outre du noir de carbone.

Le noir de carbone, lorsqu'il est présent, peut être utilisé de préférence à un taux inférieur ou égal à 10 pce, de préférence inférieur ou égal à 5 pce. De préférence, le taux du noir de carbone peut aller de 0,5 à 4 pce. Ces plages préférentielles s'appliquent à l'un quelconque des modes de réalisation de l'invention.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

### Les agents de couplage

Pour coupler la charge inorganique renforçante à la matrice élastomérique (c'est-à-dire au copolymère à base de styrène et de butadiène, notamment au SBR et S-SBR, et aux élastomères diéniques lorsqu'ils sont présents), on peut utiliser de manière bien connue un agent de couplage (ou agent de liaison) au moins bifonctionnel destiné à assurer une connexion suffisante, de nature chimique et/ou physique, entre la charge inorganique (surface de ses particules) et la matrice élastomérique. On peut utiliser en particulier des organosilanes ou des polyorganosiloxanes au moins bifonctionnels.

On peut utiliser notamment des silanes polysulfurés, dits "symétriques" ou "asymétriques" selon leur structure particulière, tels que décrits par exemple dans les demandes WO03/002648 (ou US2005/016651) et WO03/002649 (ou US2005/016650).

Conviennent en particulier, sans que la définition ci-après soit limitative, des silanes polysulfurés répondant à la formule générale (I) suivante:

(I) Z-A-Sₓ-A-Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 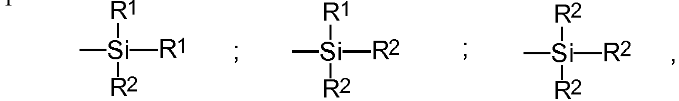 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO02/083782 précitée (ou US7217751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO02/30939 (ou US6774255), WO02/31041 (ou US2004/051210), et WO2007/061550, ou encore des silanes ou POS porteurs de groupements fonctionnels azo-dicarbonyle, tels que décrits par exemple dans les demandes de brevet WO2006/125532, WO2006/125533, WO2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US6849754, WO99/09036, WO2006/023815, WO2007/098080, WO2010/072685 et WO2008/055986.

Bien entendu pourraient être également utilisés des mélanges des agents de couplage précédemment décrits, comme décrit notamment dans la demande WO2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition. Ces plages préférentielles s'appliquent à l'un quelconque des modes de réalisation de l'invention.

### Les agents de recouvrement :

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### Système plastifiant

La composition de caoutchouc des pneumatiques conformes à l'invention comprendre de 2 à 17 pce d'un système plastifiant, ce système comprenant de 2 à 15 pce d'au moins une résine plastifiante ayant une température de transition vitreuse Tg supérieure ou égale à 20°C, et de préférence de 0 à 2 pce d'un plastifiant liquide à température ambiante.

De manière connue de l'homme du métier, la dénomination "résine" est réservée dans la présente demande, par définition, à un composé qui est solide à température ambiante (23°C), par opposition à un plastifiant liquide à température ambiante tel qu'une huile.

Les résines plastifiantes sont des polymères bien connus de l'homme du métier. Ce sont des résines hydrocarbonées essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions d'élastomère(s) diénique(s) auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods*"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante peut présenter au moins une quelconque des caractéristiques suivantes :
- une Tg supérieure ou égale à 20°C (en particulier compris entre 30°C et 100°C), plus préférentiellement supérieure ou égale à 30°C (en particulier entre 30 C et 95°C);
- un point de ramollissement supérieur ou égal à 40°C (en particulier compris entre 40°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

Plus préférentiellement, la résine plastifiante peut présenter l'ensemble des caractéristiques préférentielles ci-dessus.

A titres d'exemples de telles résines plastifiante, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les mélange de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Parmi les résines de copolymères ci-dessus, on peut citer plus particulièrement celles choisies dans le groupe constitué par les résines de copolymère CPD/ vinylaromatique, les résines de copolymère DCPD/ vinylaromatique, les résines de copolymère CPD/ terpène, les résines de copolymère DCPD/ terpène, les résines de copolymère terpène phénol, les résines de copolymère CPD/ coupe C5, les résines de copolymère DCPD/ coupe C5, les résines de copolymère CPD/ coupe C9, les résines de copolymère DCPD/ coupe C9, les mélange de résines de coupe C5 et de coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alphapinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère CPD, les résines d'homopolymère DCPD, les résines de copolymère CPD/ styrène, les résines de copolymère DCPD/ styrène, les résines de polylimonène, les résines de copolymère limonène/ styrène, les résines de copolymère limonène/CPD, les résines de copolymère limonène/ DCPD,les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, ou encore par la société Struktol sous dénomination "40 MS" ou "40 NS" (mélanges de résines aromatiques et/ou aliphatiques).

Selon un mode de réalisation de l'invention, le système plastifiant peut comporter d'autre part un plastifiant liquide à température ambiante (à 23°C) présent selon un taux inférieur ou égale à 2 pce.

Toute huile d'extension, qu'elle soit de nature aromatique ou non aromatique, tout plastifiant liquide à température ambiante connu pour ses propriétés plastifiantes vis-à-vis d'élastomères diéniques, peut être utilisable en plus de la résine plastifiante. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme plastifiants liquides à température ambiante, on peut notamment citer les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*), les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, le plastifiant liquide à température ambiante est choisi dans le groupe constitué par les huiles MES, les huiles TDAE, les huiles naphténiques, les huiles végétales et les mélanges de ces huiles.

Dans un mode de réalisation, la composition de caoutchouc de pneumatiques conformes à l'invention peut comprendre de 2 à 12 pce, d'un système plastifiant comprenant de 2 à 10 pce, d'au moins une résine plastifiante ayant une température de transition vitreuse Tg supérieure ou égale à 20°C, et de préférence de 0 à 2 pce d'un plastifiant liquide à température ambiante. Les caractéristiques préférée de la résine plastifiante telle que décrite ci-dessus et les caractéristiques préférées du plastifiant liquide à température ambiante, lorsqu'il est présent, s'appliquent à ce mode de réalisation.

Dans un autre mode de réalisation, la composition de caoutchouc de pneumatiques conformes à l'invention peut être exempte d'agent plastifiant liquide à température ambiante (23°C). Dans ce cas, la composition de caoutchouc de pneumatiques conformes à l'invention peut comprendre de 2 à 10 pce, d'un système plastifiant constitué de 2 à 10 pce, d'au moins une résine plastifiante ayant une température de transition vitreuse Tg supérieure ou égale à 20°C.

### Additifs divers

Les compositions de caoutchouc des pneumatiques conformes à l'invention peuvent comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des agents de protection tels que cires anti-ozone comme par exemple de la paraffine, anti-ozonants chimiques, anti-oxydants, des agents anti-fatigue, des pigments.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris entre 0,5 et 12 pce, en particulier entre 1 et 10 pce. Ces plages préférentielles s'appliquent à l'un quelconque des modes de réalisation de l'invention. L'accélérateur primaire de vulcanisation est utilisé à un taux préférentiel compris entre 0,5 et 10 pce, plus préférentiellement compris entre 0,5 et 5,0 pce. Ces plages préférentielles s'appliquent à l'un quelconque des modes de réalisation de l'invention.

Le taux de soufre utilisé dans la composition de caoutchouc de la bande de roulement conforme à l'invention est le plus souvent compris entre 0,5 et 3,0 pce, celui de l'accélérateur primaire entre 0,5 et 5,0 pce. Ces plages préférentielles s'appliquent à l'un quelconque des modes de réalisation de l'invention.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Fabrication de la composition et du pneumatique

La composition de caoutchouc peut être fabriquée dans des mélangeurs appropriés, en utilisant deux phases de préparation successives selon une procédure générale bien connue de l'homme du métier :
- une première phase de travail ou malaxage thermomécanique (parfois qualifiée de phase « non-productive ») à haute température, jusqu'à une température maximale comprise entre 130°C et 200°C, de préférence entre 145°C et 185°C des constituants de base de la composition est réalisée, ces constituants étant l'élastomère modifié préalablement synthétisé selon le procédé décrit-ci-dessus, la charge renforçante, l'agent de couplage, le système plastifiants et les autres ingrédient à l'exception du système de vulcanisation ou de réticulation, suivie d'
- une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation.

La composition finale ainsi obtenue peut être ensuite calandrée, par exemple sous la forme d'une feuille ou d'une plaque, notamment pour une caractérisation au laboratoire, ou encore extrudée, pour former par exemple un profilé de caoutchouc utilisé comme bande de roulement d'un pneumatique pour un véhicule portant de lourdes charges, notamment pour un véhicule poids-lourd ou pour un véhicule de génie civil.

Le pneumatique conforme à l'invention est de préférence un pneumatique destiné à équiper un véhicule portant de lourdes de charges, tels que les véhicules poids-lourds, les bus, les véhicules de génie civil. De manière préférentielle, le pneumatique conforme à l'invention est un pneumatique destiné à équiper un véhicule poids-lourd.

Le pneumatique peut être fabriqué selon tout procédé bien connu de l'homme du métier.

Les caractéristiques précitées de la présente invention, ainsi que d'autres, seront mieux comprises à la lecture de la description suivante de plusieurs exemples de réalisation de l'invention, donnés à titre illustratif et non limitatif.

### II - EXEMPLES DE REALISATION DE L'INVENTION

### II-1. Mesures et tests utilisés :

### Propriétés dynamiques

Les propriétés dynamiques et notamment tan(δ)ₘₐₓ, représentative de l'hystérèse, sont mesurées sur un viscoanalyseur (Metravib VA4000), selon la norme ASTM D 5992-96. On enregistre la réponse d'un échantillon de la composition vulcanisée (éprouvettes cylindriques de 4 mm d'épaisseur et de 400 mm² de section), soumis à une sollicitation sinusoïdale en cisaillement simple alterné, à la fréquence de 10Hz.

Pour la mesure de le module G* à 50% de déformation noté G*_{50%} et de tan(δ)ₘₐₓ, on effectue un balayage en amplitude de déformation de 0,1% à 100% crête-crête (cycle aller), puis de 100% à 0,1% crête-crête (cycle retour) à une température de 60°C. On effectue. Les résultats exploités sont le module complexe de cisaillement dynamique (G*) et le facteur de perte tan(δ). Pour le cycle aller, on indique la valeur maximale de tan(δ) observée (tan(δ)ₘₐₓ) entre les valeurs de 0,1% à 100% de déformation.

Pour la mesure de tan(δ)_{-20°C}, on effectue un balayage en température sous une contrainte de 0,7MPa, on enregistre la valeur de tan(δ) observée à -20°C.

### II-2 Préparation des compositions de caoutchouc :

On procède pour les essais qui suivent de la manière suivante: on introduit dans un mélangeur interne Polylab de 85cm³, rempli à 70% et dont la température initiale de cuve est d'environ 110°C, le ou les élastomères diéniques fonctionnalisés ou non. Ensuite, pour toutes les compositions (témoins et de l'invention) la ou les charges renforçantes éventuelles, l'agent de couplage éventuel puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### II-3 Essai A :

Cet essai a pour but de mettre en évidence l'amélioration du compromis de performances adhérence sur sol mouillé/résistance au roulement/résistance à l'usure d'une composition conforme à l'invention par rapport à des compotions non conformes à l'invention.

Pour cela, on compare 4 compositions qui différent les unes des autres essentiellement par les caractéristiques techniques qui suivent :
- la composition T1 est une composition non conforme à l'invention comprenant un SBR de Tg=-65°C non fonctionnalisé;
- la composition T2 est une composition non conforme à l'invention comprenant un SBR de Tg=-48°C non fonctionnalisé;
- la composition T3 est une composition non conforme à l'invention comprenant un SBR de Tg=-65°C fonctionnalisé par une fonction amino-alcoxysilane en milieu de chaîne;
- la composition C1 est une composition selon l'invention comprenant un SBR de Tg=-48°C fonctionnalisé par une fonction amino-alcoxysilane en milieu de chaîne.

Le tableau I donne la formulation des différentes compositions T1 à T3 et C1 ; les taux sont exprimés en pce. Toutes les compositions (T1 à T3 et C1) comprennent un système de réticulation classiquement utilisé dans la fabrication de bandes de roulement pour pneumatique ; ce système de réticulation comprenant notamment du soufre, du ZnO de l'acide stéarique et un accélérateur.

**Tableau 1**

| | **T1** | **T2** | **T3** | **C1** |
|---|---|---|---|---|
| **SBR (1)** | (-) | 80 | (-) | (-) |
| **SBR (2)** | 80 | (-) | (-) | (-) |
| **SBR (3)** | (-) | (-) | (-) | 80 |
| **SBR (4)** | (-) | (-) | 80 | (-) |
| **BR (5)** | 20 | 20 | 20 | 20 |
| **Silice (6)** | 65 | 65 | 65 | 65 |
| **Noir de carbone (7)** | 4 | 4 | 4 | 4 |
| **Résine (8)** | 10 | 10 | 10 | 10 |
| **Agent de couplage (9)** | 6,5 | 6,5 | 6,5 | 6,5 |
| **DPG (10)** | 0,9 | 0,9 | 0,9 | 0,9 |
| **Antioxydant (11)** | 2 | 2 | 2 | 2 |
| **Paraffine** | 1 | 1 | 1 | 1 |

| | | | | |
|---|---|---|---|---|
| *(1) SBR solution non fonctionnel, non étendu, avec 24% de motifs polybutadiène 1,2* ; *26.5% de motifs styrène et une Tg = -48°C ;* *(2) SBR solution non fonctionnel, non étendu, avec 24% de motifs polybutadiène 1,2* : *15,5% de motif styrène, et une Tg = -65° C ;* *(3) SBR solution fonctionnalisé par une fonction amino-alcoxysilane en milieu de chaîne (plus de 51 % en poids du poids de l'élastomère), non étendu, avec 24% de motifs polybutadiène 1,2 ; 26.5% de motifs styrène et une Tg = -48°C ; ce copolymère a été synthétisé selon le procédé décrit dans le document* WO2009/133068 *(4) SBR solution fonctionnalisé par une fonction amino-alcoxysilane en milieu de chaîne (plus de 51 % en poids du poids de l'élastomère), non étendu, avec 24% de motifs polybutadiène 1,2 ; 15,5* % *de motifs styrène et une Tg* = -*65°C ; ce copolymère a été synthétisé selon le procédé décrit dans le document* WO2009/133068 *(5) Polybutadiène Néodyme avec 98% de motifs 1,4-cis butadiène et une Tg = -108°C ;* *(6) Silice « Zeosil 1165 MP » type « HDS » de la société Solvay* ; *(7) Noir de carbone N134 ;* *(8) Résine coupe C5*/*C9 commercialisée par la société Cray Valley sous la dénomination « Résine THER 8644 » (Tg = 44°C) ;* *(9) Agent de couplage : TESPT (« Si69 » de la société Evonik* - *Degussa) ;* *(10) Diphénylguanidine (« Perkacit » DPG de la société Flexsys) ;* *(11) N-1, 3-diméthylbutyl-N-phényl-para-phénylènediamine commercialisée par la société Flexsys sous la dénomination "Santoflex 6-PPD".* | | | | |

Les propriétés des compositions après cuisson à 150°C pendant 45 min sont présentées dans le tableau 2 ci-dessous.

**Tableau 2**

| | **T1** | **T2** | **T3** | **C1** |
|---|---|---|---|---|
| **G*50% (MPa)** | 2,1 | 1,9 | 2,0 | 1,9 |
| **tan(δ)max** | 0,185 | 0,190 | 0,143 | 0,139 |
| **tan(δ)_{-20°C}** | 0,389 | 0,631 | 0,331 | 0,673 |

D'après le tableau 2, on constate, à rigidité équivalente (valeur de G*50%), que la composition T2 non conforme à l'invention comprenant un SBR de haute Tg non fonctionnalisé permet, par rapport à la composition T1 non conforme à l'invention comprenant un SBR de basse Tg non fonctionnalisé, une amélioration significative de la performance d'adhérence sur sol mouillé (valeur tan(δ)_{-20°C}) accompagnée d'une dégradation de la performance résistance au roulement (valeur tan(δ)max). Le compromis de performances adhérence sur sol mouillé/résistance au roulement/résistance à l'usure n'est pas amélioré pour la composition T2 par rapport à la composition T1 non conforme à l'invention.

Par ailleurs, on constate, à rigidité équivalente, que la composition T3 non conforme à l'invention comprenant un SBR basse Tg fonctionnalisé par une fonction amino-silane en milieu de chaîne permet, par rapport à la composition T1 non conforme à l'invention comprenant un SBR basse Tg non fonctionnalisé, une amélioration significative de la performance résistance au roulement mais au détriment de la performance d'adhérence au sol mouillé. Le compromis de performances adhérence sur sol mouillé/résistance au roulement/résistance à l'usure n'est pas amélioré pour la composition T3 par rapport à la composition T1 non conforme à l'invention.

De manière surprenante, à rigidité équivalente, la composition C1 conforme à l'invention comprenant un SBR haute Tg fonctionnalisé par une fonction amino-silane en milieu de chaîne permet, par rapport à la composition T1 non conforme à l'invention, une amélioration significative à la fois de la performance résistance au roulement et de la performance adhérence sur sol mouillé. La composition C1 conforme à l'invention présente donc, de manière surprenante, un compromis de performances adhérence sur sol mouillé/résistance au roulement/résistance à l'usure amélioré par rapport à la composition T1 non conforme à l'invention.

## Revendications

1. Pneumatique destiné à équiper un véhicule portant de lourdes charges, ce pneumatique comportant une bande de roulement ayant au moins une composition de caoutchouc à base d'au moins:
une matrice élastomère comprenant au moins un copolymère modifié à un taux supérieur ou égal à 51 pce, ledit copolymère modifié ayant une température de transition vitreuse Tg strictement supérieure à -65°C et inférieure ou égale à -30°C, ledit copolymère modifié étant obtenu par modification du copolymère à base de styrène et de butadiène avec un agent de fonctionnalisation sur le copolymère vivant issu d'étape de polymérisation anionique et est composé de copolymères fonctionnalisés en extrémité de chaîne, de copolymères étoilés et de copolymères fonctionnalisés en milieu de chaîne par un groupe alcoxysilane liant les deux branches dudit copolymère par l'intermédiaire de l'atome de silicium qui est porteur d'une fonction amine lié directement ou par l'intermédiaire d'un groupe espaceur à l'atome de silicium, l'agent de fonctionnalisation répondant à la formule
(OR')₃ SiX
dans laquelle,
• dans les radicaux alcoxyle de formule -OR', R' représente un radical alkyle, substitué ou non substitué, en C₁-C₁₀, voire en C₁-C₈, de préférence un groupe alkyle en C₁-C₄, plus préférentiellement méthyle et éthyle ;
• X représente un groupement incluant une fonction amine,
- une charge renforçante comprenant à titre majoritaire de la silice,
- un système de réticulation chimique,
- un agent de couplage entre ladite matrice élastomérique et ladite charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition va de 2 à 17 pce, de préférence de 2 à 12 pce.

2. Pneumatique selon la revendication 1, dans lequel la fonction amine dudit copolymère modifié est une amine primaire, secondaire ou tertiaire.

3. Pneumatique selon la revendication 2, dans lequel la fonction amine dudit copolymère modifié est une amine tertiaire et est choisie parmi la diéthylamine et la diméthylamine.

4. Pneumatique selon l'une quelconque des revendications 1 à 3, dans lequel la fonction amine dudit copolymère modifié est portée par le groupe alcoxysilane par l'intermédiaire d'un groupement espaceur.

5. Pneumatique selon la revendication 4, dans lequel le groupe espaceur portant la fonction amine du copolymère modifié est un radical hydrocarboné aliphatique en C₁-C₁₈, de préférence un radical hydrocarboné linéaire en C₂ ou C₃.

6. Pneumatique selon l'une quelconque des revendications 1 à 5, dans lequel le groupe alcoxysilane du copolymère modifié est le méthoxysilane ou l'éthoxysilane, éventuellement partiellement ou totalement hydrolysé en silanol.

7. Pneumatique selon l'une quelconque des revendications 1 à 6, dans lequel le copolymère modifié a une température de transition vitreuse allant de - 60 à - 40°C.

8. Pneumatique selon l'une quelconque des revendications 1 à 7, dans lequel la matrice élastomère comprend en outre au moins un deuxième élastomère diénique différent du copolymère modifié.

9. Pneumatique selon la revendication 8, dans lequel le deuxième élastomère diénique est choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence le deuxième élastomère diénique est un polybutadiène.

10. Pneumatique selon les revendications 8 ou 9, dans lequel le taux du deuxième élastomère diénique va de 5 à 49 pce, de préférence de 15 à 35 pce.

11. Pneumatique selon l'une des revendications 1 à 10, dans lequel la composition comprend en outre du noir de carbone.

12. Pneumatique selon l'une quelconque des revendications 1 à 11, dans lequel le taux de la charge renforçante va de 55 à 200 pce, de préférence de 55 à 150 pce, de manière plus préférée de 55 à 80 pce.

13. Pneumatique selon l'une quelconque des revendications 1 à 12, dans lequel le système plastifiant comprend de 0 à 2 pce d'au moins un agent plastifiant liquide à température ambiante.

14. Pneumatique selon l'une quelconque des revendications 1 à 13, dans lequel la composition est exempte d'un agent plastifiant liquide à température ambiante.

15. Pneumatique selon l'une quelconque des revendications 1 à 14, **caractérisé en ce qu'**il est destiné à équiper un véhicule poids-lourd ou bus.

## Patentansprüche

1. Reifen zur Ausstattung eines schwere Lasten tragenden Fahrzeugs, wobei dieser Reifen eine Lauffläche umfasst, die mindestens eine Kautschukzusammensetzung auf Basis von mindestens:
einer Elastomermatrix, umfassend mindestens ein modifiziertes Copolymer in einem Gehalt größer oder gleich 51 phe, wobei das modifizierte Copolymer eine Glasübergangstemperatur Tg aufweist, die streng größer als -65 °C und kleiner oder gleich -30 °C ist, wobei das modifizierte Copolymer durch Modifizierung des Copolymers auf Basis von Styrol und Butadien mit einem Funktionalisierungsmittel an dem lebenden Copolymer aus dem Schritt der anionischen Polymerisation erhalten wird und aus am Kettenende funktionalisierten Copolymeren, sternförmigen Copolymeren und in der Kettenmitte durch eine Alkoxysilangruppe, die die beiden Arme des Copolymers über das Siliciumatom, das eine direkte oder über eine Spacergruppe an das Siliciumatom gebundene Aminfunktion trägt, verbindet, funktionalisierten Copolymeren besteht, wobei das Funktionalisierungsmittel der Formel:
(OR')₃ SiX
entspricht, in der
• in den Alkoxylresten der Formel -OR', R' für einen substituierten oder unsubstituierten C₁-C₁₀- oder sogar C₁-C₈-Alkylrest, vorzugsweise eine C₁-C₄-Alkylgruppe, weiter bevorzugt Methyl und Ethyl, steht;
• X für eine Gruppe mit einer Aminfunktion steht,
- einem verstärkenden Füllstoff, der hauptsächlich Kieselsäure umfasst,
- einem chemischen Vernetzungssystem,
- einem Mittel zum Kuppeln zwischen der Elastomermatrix und dem verstärkenden Füllstoff,
- einem Weichmachersystem, umfassend 2 bis 15 phe, vorzugsweise 2 bis 10 phe, mindestens eines Weichmacherharzes mit einer Glasübergangstemperatur Tg größer oder gleich 20 °C, wobei der Gesamtgehalt des Weichmachersystems in der Zusammensetzung im Bereich von 2 bis 17 phe, vorzugsweise von 2 bis 12 phe liegt, aufweist.

2. Reifen nach Anspruch 1, wobei die Aminfunktion des modifizierten Copolymers ein primäres, sekundäres oder tertiäres Amin ist.

3. Reifen nach Anspruch 2, wobei die Aminfunktion des modifizierten Copolymers ein tertiäres Amin ist und aus Diethylamin und Dimethylamin ausgewählt ist.

4. Reifen nach einem der Ansprüche 1 bis 3, wobei die Alkoxysilangruppe die Aminfunktion des modifizierten Copolymers über eine Spacergruppe trägt.

5. Reifen nach Anspruch 4, wobei die Spacergruppe, die die Aminfunktion des modifizierten Copolymers trägt, ein aliphatischer C₁-C₁₈-Kohlenwasserstoffrest, vorzugsweise ein linearer C₂- oder C₃-Kohlenwasserstoffrest, ist.

6. Reifen nach einem der Ansprüche 1 bis 5, wobei die Alkoxysilangruppe des modifizierten Copolymers Methoxysilan oder Ethoxysilan, gegebenenfalls teilweise oder vollständig zu Silanol hydrolysiert, ist.

7. Reifen nach einem der Ansprüche 1 bis 6, wobei das modifizierte Copolymer eine Glasübergangstemperatur im Bereich von -60 bis -40 °C aufweist.

8. Reifen nach einem der Ansprüche 1 bis 7, wobei die Elastomermatrix außerdem mindestens ein zweites Dienelastomer, das von dem modifizierten Copolymer verschieden ist, umfasst.

9. Reifen nach Anspruch 8, wobei das zweite Dienelastomer aus der Gruppe bestehend aus Polybutadienen, Naturkautschuk, synthetischen Isoprenen, Butadien-Copolymeren, die von Butadien-Styrol-Copolymeren verschieden sind, Isopren-Copolymeren und Mischungen dieser Polymere und Copolymere ausgewählt ist; vorzugsweise das zweite Dienelastomer ein Polybutadien ist.

10. Reifen nach Anspruch 8 oder 9, wobei der Gehalt des zweiten Dienelastomers im Bereich von 5 bis 49 phe, vorzugsweise von 15 bis 35 phe, liegt.

11. Reifen nach einem der Ansprüche 1 bis 10, wobei die Zusammensetzung außerdem Ruß umfasst.

12. Reifen nach einem der Ansprüche 1 bis 11, wobei der Gehalt des verstärkenden Füllstoffs im Bereich von 55 bis 200 phe, vorzugsweise von 55 bis 150 phe, weiter bevorzugt von 55 bis 80 phe, liegt.

13. Reifen nach einem der Ansprüche 1 bis 12, wobei das Weichmachersystem 0 bis 2 phe mindestens eines bei Umgebungstemperatur flüssigen Weichmachers umfasst.

14. Reifen nach einem der Ansprüche 1 bis 13, wobei die Zusammensetzung frei von bei Umgebungstemperatur flüssigem Weichmacher ist.

15. Reifen nach einem der Ansprüche 1 bis 14, **dadurch gekennzeichnet, dass** er zur Ausstattung eines Schwerlastfahrzeugs oder eines Busses vorgesehen ist.

## Claims

1. Tyre intended to equip a vehicle bearing heavy loads, this tyre comprising a tread including at least one rubber composition based on at least:
- an elastomer matrix comprising at least one modified copolymer at a content greater than or equal to 51 phr, said modified copolymer having a glass transition temperature Tg strictly above -65°C and below or equal to -30°C, said modified copolymer being obtained by modification of the copolymer based on styrene and butadiene with a functionalizing agent on the living copolymer obtained from the anionic polymerization step and is composed of copolymers functionalized at the chain end, star-branched copolymers and copolymers functionalized in the middle of the chain with an alkoxysilane group linking the two arms of said copolymer via the silicon atom which bears an amine function bonded directly or via a spacer group to the silicon atom, the functionalizing agent corresponds to the formula:
(OR')₃SiX
in which:
• in the alkoxyl radicals of formula -OR', R' represents a substituted or unsubstituted C₁-C₁₀ or even C₁-C₈ alkyl radical, preferably a C₁-C₄ alkyl group, more preferentially methyl and ethyl;
• X represents a group including an amine function.
- a reinforcing filler predominantly comprising silica,
- a chemical crosslinking system,
- an agent for coupling between said elastomeric matrix and said reinforcing filler,
- a plasticizing system comprising from 2 to 15 phr, preferably from 2 to 10 phr, of at least one plasticizing resin having a glass transition temperature Tg of greater than or equal to 20°C, and of which the total content of the plasticizing system in the composition ranges from 2 to 17 phr, preferably from 2 to 12 phr.

2. Tyre according to Claim 1, in which the amine function of said modified copolymer is a primary, secondary or tertiary amine.

3. Tyre according to Claim 2, in which the amine function of said modified copolymer is a tertiary amine and is chosen from diethylamine and dimethylamine.

4. Tyre according to any one of Claims 1 to 3, in which the amine function of said modified copolymer is borne by the alkoxysilane group via a spacer group.

5. Tyre according to Claim 4, in which the spacer group bearing the amine function of the modified copolymer is a C₁-C₁₈ aliphatic hydrocarbon-based radical, preferably a linear C₂ or C₃ hydrocarbon-based radical.

6. Tyre according to any one of Claims 1 to 5, in which the alkoxysilane group of the modified copolymer is methoxysilane or ethoxysilane, optionally partially or totally hydrolysed to silanol.

7. Tyre according to any one of Claims 1 to 6, in which the modified copolymer has a glass transition temperature ranging from -60 to -40°C.

8. Tyre according to any one of Claims 1 to 7, in which the elastomer matrix further comprises at least one second diene elastomer different from the modified copolymer.

9. Tyre according to Claim 8, in which the second diene elastomer is chosen from the group consisting of polybutadienes, natural rubber, synthetic isoprenes, butadiene copolymers other than butadiene-styrene copolymers, isoprene copolymers, and mixtures of these polymers and copolymers; preferably, the second diene elastomer is a polybutadiene.

10. Tyre according to Claim 8 or 9, in which the content of the second diene elastomer ranges from 5 to 49 phr, preferably from 15 to 35 phr.

11. Tyre according to one of Claims 1 to 10, in which the composition also comprises carbon black.

12. Tyre according to any one of Claims 1 to 11, in which the content of the reinforcing filler ranges from 55 to 200 phr, preferably from 55 to 150 phr, more preferably from 55 to 80 phr.

13. Tyre according to any one of Claims 1 to 12, in which the plasticizing system comprises from 0 to 2 phr of at least one plasticizing agent that is liquid at room temperature.

14. Tyre according to any one of Claims 1 to 13, in which the composition is free of a plasticizing agent that is liquid at room temperature.

15. Tyre according to any one of Claims 1 to 14, **characterized in that** it is intended to equip a heavy-duty vehicle or bus.
